# EUROPÄISCHE PATENTSCHRIFT

(11) **EP 0 355 714 B1**
(45) Veröffentlichungstag und Bekanntmachung des Hinweises auf die Patenterteilung: **07.12.1994**
(21) Anmeldenummer: 89115187.0
(22) Anmeldetag: 17.08.1989
(51) Int. Cl.: H04L 13/00, H04L 29/02, G06F 9/44, H04M 3/42, H04Q 3/00

(54) **Verfahren und Anordnung zum Einstellen von Kommunikationsdiensten**
Method and apparatus for initiating communication services
Procédé et dispositif pour l'ajustement de services de communication

(30) Priorität: 17.08.1988 DE 3827950
(43) Veröffentlichungstag der Anmeldung: 28.02.1990
(73) Patentinhaber: Siemens Nixdorf Informationssysteme Aktiengesellschaft, 33102 Paderborn (DE)
(72) Erfinder: Golbach, Hermann, Dipl.-Ing., D-4794 Hövelhof (DE); Lerch, Peter, Dipl.-Ing., D-4790 Paderborn (DE)
(74) Vertreter: Fuchs, Franz-Josef, Dr.-Ing.

(56) Entgegenhaltungen:
- EP-A- 0 116 296
- EP-A- 0 217 351
- DE-A- 3 428 237
- DE-A- 3 721 047
- US-A- 4 335 426
- US-A- 4 748 654

## Beschreibung

Die Erfindung betrifft ein Verfahren und eine Vorrichtung zum Einstellen von Kommunikationsdiensten in Kommunikationsendgeräten eines Kommunikationsnetzes mit einer Mehrzahl von Kommunikationsendgeräten, mindestens einer Steuereinheit und mindestens einem Datenträger.

Aus der DE-A 34 28 237 ist eine Anordnung zum Einstellen unterschiedlicher Kommunikationsdienste in einem Kommunikationsgerät bekannt, bei der in einem Kommunikationsgerät ein Chipkartenleser vorgesehen ist, in den verschiedene Chipkarten einsteckbar sind. Die Chipkarten enthalten Schaltkreise, die unterschiedlichen Kommunikationsdiensten zugeordnet sind und die die Funktionen des Kommunikationsgerätes derart erweitern, daß weitere Kommunikationsdienste mit dem Kommunikationsgerät durchgeführt werden können. Dies hat den Nachteil, daß für mehrere Kommunikationsdienste ein Sortiment an Chipkarten für jedes Kommunikationsgerät benötigt wird. Schwierigkeiten treten auf, wenn die Systemsoftware auf den Chipkarten überarbeitet wird. Dann ist es notwendig, die Chipkarten für jedes Kommunikationsgerät auszutauschen. Da dies nicht immer gleichzeitig erfolgen kann, ist es möglich, daß verschiedene Kommunikationsgeräte mit unterschiedlichen Chipkartenversionen betrieben werden, was zu Kompatibilitätsproblemen bei einer Kommunikationsverbindung zwischen solchen Kommunikationsgeräten führen kann.

Aus US-A-4 335 426 ist ein Computernetz bekannt, bei dem die über ein Kommunikationsnetz verbindbaren Computer unterschiedliche Protokollvarianten aufweisen. Um eine Kommunikation zwischen den Computern zu ermöglichen, ist in zumindest einem der Computer ein Verzeichnis gespeichert. In diesem Verzeichnis sind für jeden angeschlossenen Computer protokollvariantenspezifische Informationen, z.B. Datenrate, Paritybit usw., gespeichert. Soll ein Computer mit einem gewünschten Computer kommunizieren, so muß in diesem zuerst eine Verzeichnisnummer des gewünschten Computers festgestellt werden und anschließend mit Hilfe dieser Verzeichnisnummer werden die protokollvariantenspezifischen Informationen aus dem Verzeichnis abgerufen. Ist in dem jeweiligen Computer kein Verzeichnis gespeichert, so muß von diesem Computer vor einer Kommunikationsbeziehung mit dem gewünschten Computer eine Verbindung zu einem Computer hergestellt werden, in dem ein Verzeichnis gespeichert ist. Ein Einstellen von Kommunikationsdiensten für mehrere Kommunikationsendgeräte ist hierbei nicht vorgesehen.

Es ist daher Aufgabe der Erfindung, ein Verfahren und eine Vorrichtung anzugeben, die die schnelle Einstellung eines Kommunikationsdienstes zwischen mehreren Kommunikationsendgeraten erlaubt, ohne daß es zu Kompatibilitätsproblemen aufgrund verschiedener Softwareversionen kommt.

Die Aufgabe wird erfindungsgemäß in einem Verfahren eingangs genannter Art dadurch gelöst, daß mit Hilfe der Steuereinheit die für einen weiteren Kommunikationsdienst erforderlichen Konfigurations- und/oder Programmdaten von einem Datenträger auf eine gewünschte Anzahl von an der Kommunikation beteiligten Kommunikationsendgeräten übertragen werden, wobei das Einstellen des weiteren Kommunikationsdienstes und die Übertragung von einem der beteiligten Kommunikationsendgeräte aus in einem konfigurierten Basisdienst veranlaßt wird. Die für den Aufbau eines weiteren Kommunikationsdienstes notwendigen Daten werden so von einem einzigen Datenträger in die am Kommunikationsdienst beteiligten Kommunikationsendgeräte geladen, was zur Folge hat, daß alle Kommunikationsendgeräte mit übereinstimmender Software arbeiten.

Es ist möglich, daß ein Kommunikationsdienst z.B. aufgrund unterschiedlicher Hardwarekonfigurationen der Kommunikationsendgeräte nicht einstellbar sind. Es wäre dann wünschenswert, dennoch eine Kommunikationsverbindung zwischen diesen Kommunikationsendgeräten auf einer niedrigeren Ebene aufzubauen. In einem Kommunikationssystem mit einem durch eine Standardkonfiguration eingestellten Basiskonfigurationsdienst ist es daher von Vorteil, wenn bei nicht konfigurierbaren Kommunikationsendgeräten der Basiskommunikationsdienst eingestellt wird.

Das erfindungsgemäße Verfahren läßt sich vorteilhaft in einem Kommunikationssystem durchführen, das mehrere Kommunikationsendgeräte enthält, denen jeweils ein Datenträger zugeordnet ist. Die für den Aufbau eines Kommunikationsdienstes notwendigen Konfigurations- und Programmdaten können dann vom Datenträger desjenigen Kommunikationsendgerätes geladen werden, von dem aus der Aufbau des Kommunikationsdienstes veranlaßt wird. Vorteilhaft bei dieser Anordnung ist die Möglichkeit, von jedem Kommunikationsendgerät aus Kommunikationsdienste in dem Kommunikationsnetz einzustellen. Die Organisation des Aufbaus des Kommunikationsdienstes kann hierbei von der Steuereinheit des Kommunikationsendgerätes übernommen werden.

Es ist vorteilhaft, wenn dasjenige Kommunikationsendgerät, von dem aus das Einstellen des Kommunikationsdienstes veranlaßt wird, vor der gewünschten Anzahl von Kommunikationsendgeräten mit den für den Aufbau eines Kommunikationsdienstes erforderlichen Konfigurationsdaten geladen wird. Der Anwender kann dann von seinem Kommunikationsendgerät aus anhand der bereits geladenen Konfigurationsdaten den Aufbau des Kommunikationsdienstes, z.B. durch Abfrage der Kommunikationsfähigkeit anderer Kommunikationsendgeräte vorbereiten.

Der Datenträger kann in vorteilhafter Weise auch an einer zentralen Stelle im Kommunikationsnetz angeordnet sein, wodurch bei einer Änderung der Betriebssoftware lediglich auf diesen einen Datenträger zugegriffen werden muß. In einem Kommunikationsnetz mit mehreren Vermittlungsstellen ist vorteilhafterweise ein Datenträger jeweils einer Vermittlungsstelle zugeordnet. Innerhalb der Vermittlungsstelle können so Kommunikationsdienste eingestellt werden, ohne daß auf übergeordnete Ebenen im Kommunikationsnetz zugegriffen werden muß.

Ein Kommunikationsendgerät zur Durchführung des erfindungsgemäßen Verfahrens besteht aus einer Mehrzahl von Kommunikationsapparaten, die jeweils über einen Umsetzer mit einem Informations- und einem Signalisierungskanal verbunden sind. Die Anordnung enthält außerdem einen Rechner mit einem Arbeitsspeicher zur Organisation und Steuerung von Kommunikationsdiensten. Eine derartige Anordnung wird in vorteilhafterweise weitergebildet, wenn der Arbeitsspeicher mit dem Informationskanal verbunden ist. Hierdurch können Kommunikationsendgeräte auf die im Arbeitsspeicher abgelegten Konfigurationsdaten zurückgreifen, ohne den Rechner mit dem Aufbau des Kommunikationsdienstes zu belasten. Konfigurationsdaten können außerdem über den Teilnehmeranschluß in den Arbeitsspeicher geladen werden. Die im Arbeitsspeicher befindlichen Daten können ebenso über den Teilnehmeranschluß zu weiteren Anordnungen übertragen werden.

Die oben genannten Merkmale und Vorteile der Erfindung werden in Ausführungsbeispielen anhand der Zeichnungen und der dazugehörenden Beschreibung veranschaulicht. Es zeigen:
- Fig. 1: eine erfindungsgemäße Anordnung eines Kommunikationsnetzes, bei dem ein Datenträger jeweils einem Kommunikationsendgerät zugeordnet ist,
- Fig. 2: eine Anordnung eines Kommunikationsnetzes mit einem zentral angeordneten Datenträger,
- Fig. 3: eine Anordnung eines Kommunikationsnetzes mit mehreren Vermittlungsstellen, denen jeweils ein Datenträger zugeordnet ist,
- Fig. 4: ein mit Konfigurations- und Programmdaten ladbares Kommunikationsendgerät eines Kommunikationsnetzes,
- Fig. 5: ein nicht ladbares Kommunikationsendgerät in einem Kommunikationsnetz und
- Fig. 6: einen Ablaufplan für den Aufbau eines Kommunikationsdienstes in einer Anordnung nach Fig. 1.

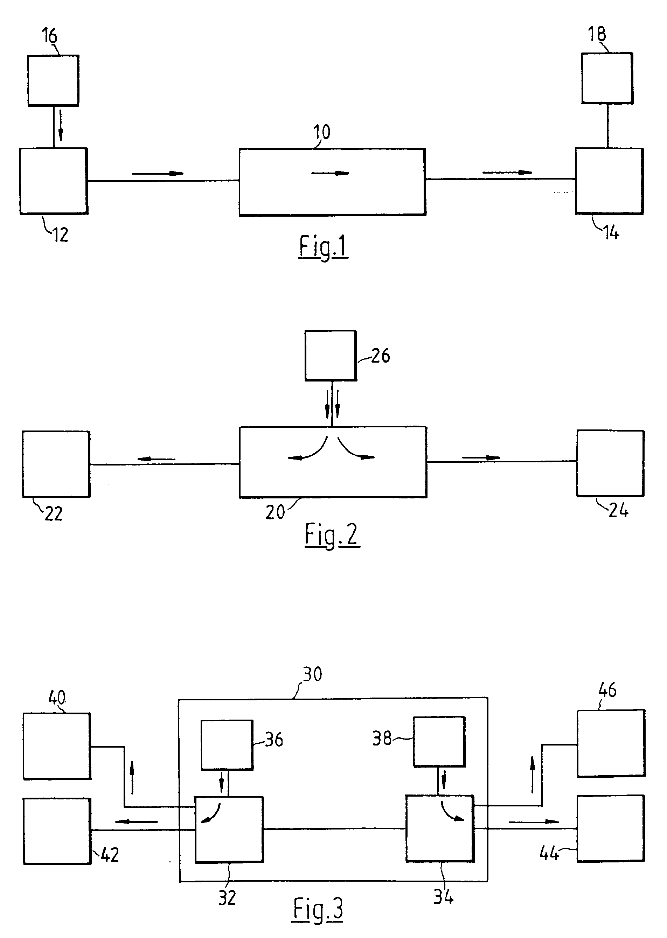

In Fig. 1 ist ein Kommunikationssystem 10 mit einem ersten und einem zweiten Kommunikationsendgerät 12, 14 dargestellt. Den beiden Endgeräten 12, 14 ist jeweils ein Datenträger 16, 18 zugeordnet. Auf diesem Datenträger 16, 18 sind Konfigurations- und Programmdaten der Endgeräte 12, 14 gespeichert. Soll nun ein Kommunikationsdienst zwischen den beiden Endgeräten 12, 14 aufgebaut werden, so müssen beide Endgeräte 12, 14 auf diesen Dienst eingestellt werden.

Handelt es sich bei dem aufzubauenden Kommunikationsdienst um einen Basiskommunikationsdienst, zum Beispiel eine Sprachverbindung, so sind die Endgeräte 12, 14 bereits durch eine Basissoftware auf diese Verbindung eingestellt. Beim Aufbauen eines höheren Kommunikationsdienstes, zum Beispiel einer Bildverbindung wird, von dem ersten Endgerät 12 aus zunächst das erste Endgerät 12 auf die erforderlichen Leistungsmerkmale konfiguriert und programmiert. Hierfür werden die erforderlichen Konfigurations- und Programmdaten von dem zugeordneten Datenträger 16 geladen. Nachdem eine physikalische Verbindung über das Kommunikationssystem 10 zum zweiten Endgerät 14 hergestellt ist, wird dieses über das erste Endgerät 12 konfiguriert und programmiert. Ist eine Einstellung des zweiten Endgerätes 14 auf den höheren Kommunikationsdienst möglich, so wird dieser bei dem zweiten Endgerät 14 eingestellt, was dem ersten Endgerät 12 rückgemeldet wird. Ist das zweite Endgerät zum Beispiel aufgrund seiner Hardwarekonfiguration nicht in der Lage, den höheren Kommunikationsdienst auszuführen, so wird der Basiskommunikationsdienst zwischen den beiden Endgeräten eingestellt. Da sowohl Steuer- als auch Programmdaten zwischen den Endgeräten übertragen werden, ist entweder ein Kanal für Datenübertragung und ein Kanal für Signalübertragung vorgesehen, oder Signal- und Programmdaten werden unterschiedlich verschlüsselt über denselben Kanal übertragen.

Fig. 2 zeigt ein Kommunikationssystem 20 mit zwei Kommunikationsendgeräten 22, 24. Ein Datenträger 26 ist einer zentralen Stelle im Kommunikationssystem 20 zugeordnet. Damit müssen lediglich die Daten in diesem zentralen Datenträger 26 auf dem neuesten Stand gehalten werden.

Die Kommunikationsendgeräte 22, 24 werden bei Aufbau eines Kommunikationsdienstes mit Konfigurations- und programmdaten von dem zentalen Datenträger 26 geladen. Hierdurch wird die Übertragungsstrecke zwischen dem Datenträger 26 und einer in dem Kommunikationssystem 20 angeordneten Verteilungsstelle stärker belastet. Der Ladevorgang kann über die Steuereinheit eines der Endgeräte 22, 24 oder über eine auf die Auswahl eines Kommunikationsdienstes reagierende zentrale Steuereinheit veranlaßt werden. Die Konfigurations- und Programmdaten werden bei dieser Anordnung während des Ladevorgangs auch in das Endgerät 22, 24 geladen, von dem aus der Aufbau des Kommunikationsdienstes veranlaßt worden ist. Die Pfeile charakterisieren den Datenfluß im Kommunikationssystem.

Fig. 3 zeigt ein Kommunikationssystem 30 mit zwei Vermittlungsstellen 32, 34, denen jeweils ein Datenträger 36, 38 und mehrere Kommunikationsendgeräte 40 bis 46 zugeordnet sind. Beim Aufbau eines Kommunikationsdienstes werden die an die erste Vermittlungsstelle 32 angeschlossenen Kommunikationsendgeräte 40, 42 mit Konfigurations- und Programmdaten von dem dieser Vermittlungsstelle 32 zugeordneten ersten Datenträger 36 geladen. Die der zweiten Vermittlungsstelle 34 zugeordneten Kommunikationsendgeräte 44, 46 werden mit Konfigurations- und Programmdaten von dem dieser Vermittlungsstelle 34 zugeordneten zweiten Datenträger 38 geladen. Durch diese Verteilung der Datenträger 36, 38 wird die Datenübertragung zwischen den Vermittlungsstellen 32, 34 während des Verbindungsaufbaus eines Kommunikationsdienstes auf ein Mindestmaß begrenzt. Überarbeitete Software muß zwar in mehrere Datenträger 36, 38 geladen werden, was jedoch über eine nicht dargestellte zentrale Recheneinheit bei allen Datenträgern 36, 38 gleichzeitig durchgeführt werden kann.

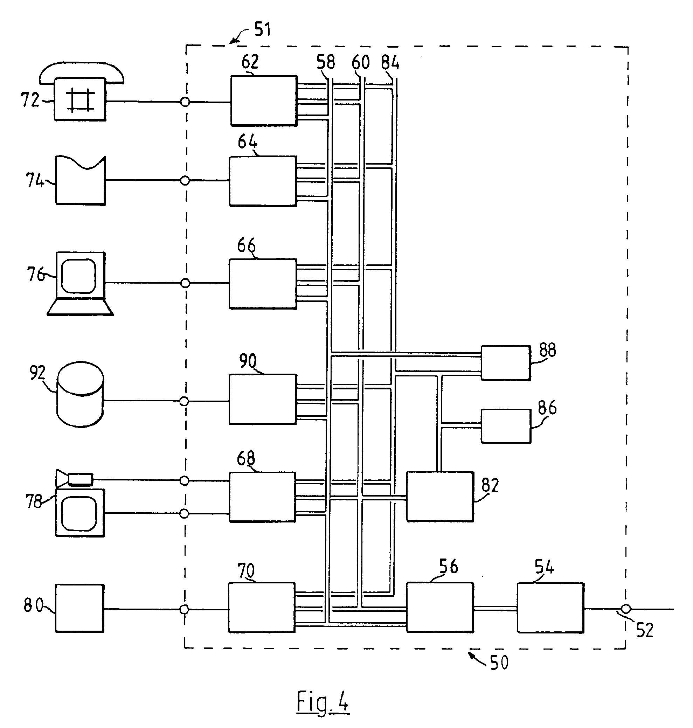

Fig. 4 zeigt ein mit Konfigurations- und Programmdaten ladbares Kommunikationsendgerät 51 für den Anschluß an ein Kommunikationsnetz, z.B. ein Fernmeldenetz. Dieses Kommunikationsendgerät 51 entspricht einem der Kommunikationsendgeräte aus den Figuren 1 bis 3 und ist als multifunktionales Kommunikationsendgerät 51 für die Durchführung unterschiedlicher Kommunikationsdienste geeignet. Die Teilnehmeranschlußleitung 52, die das Kommunikationsendgerät 51 mit einem Kommunikationsnetz verbindet, führt auf eine Leitungsschnittstelle 54 der Steuereinrichtung 50 des Kommunikationsendgerätes 51. Diese Leitungsschnittstelle 54 setzt die Signalpegel auf der Teilnehmeranschlußleitung 52 in digitale Signale zur weiteren Bearbeitung durch einen darauffolgenden Multiplexer-Demultiplexer 56 um. Dort werden die Informations- und Signalisierungsdaten getrennt. Die Informationsdaten gelangen auf den Informationskanal 58, während die Signalisierungsdaten auf einen Signalisierungskanal 60 gelegt werden. Die Nutzinformationen stehen also auf dem Informationskanal 58, die Steuerinformationen auf dem Signalisierungskanal 60 zur Verfügung. Diese beiden Kanäle 58, 60 sind über Umsetzer 62 bis 70 mit unterschiedlichen Kommunikationsapparaten 72 bis 80 zur Nutzung verschiedener Dienste verbunden, wobei jeweils einem Kommunikationsapparat 72 bis 80 einer der Umsetzer 62 bis 70 zur dienstspezifischen Aufbereitung der Signalisierungs- und Informationsdaten zugeordnet ist. So kann z. B. für den Bildfernsprecher 78 eine Digital-Analogwandlung durchgeführt werden. Weitere Apparate die durch die Steuereinrichtung 50 koordiniert werden, sind ein Telefonapparat 72, ein Drucker 74, ein Bildschirmarbeitsplatz mit Tastatur 76 und ein Telefaxgerät 80. Zur Steuerung des Verbindungsablaufs und der Nutzinformationsverteilung ist ein Rechner 82 an den Signalisierungskanal 60 angeschlossen.

Dieser Rechner 82 verfügt über einen Adress- und Datenkanal 84, über den er mit einem einen unveränderlichen Teil des Betriebsprogramms enthaltenden ersten Programmspeicher 86, einem zweiten Programm- und Datenspeicher 88 für veränderliche Daten, und mit den Umsetzern 62 bis zur Steuerung der Dienste verbunden ist. Das Kommunikationsendgerät 51 enthält einen z. B. als Magnetplatte ausgebildeten Datenträger 92, der über einen weiteren Umsetzer 90 mit den Kanälen 58, 60, 84 verbunden ist. Um den Rechner 82 bei Ladevorgängen des Programm- und Datenspeichers 88 möglichst wenig zu belasten, können Daten vom Datenträger 92 nach dessen Adressierung über den Kanal 84 direkt über den Kanal 58 in den Programm- und Datenspeicher 88 geladen werden. Ebenso können Konfigurations- und Programmdaten über die Teilnehmeranschlußleitung 52, die Leitungsschnittstelle 54, den Multiplexer-Demultiplexer 56 und den Kanal 58 in den Programm- und Datenspeicher 88 geladen werden.

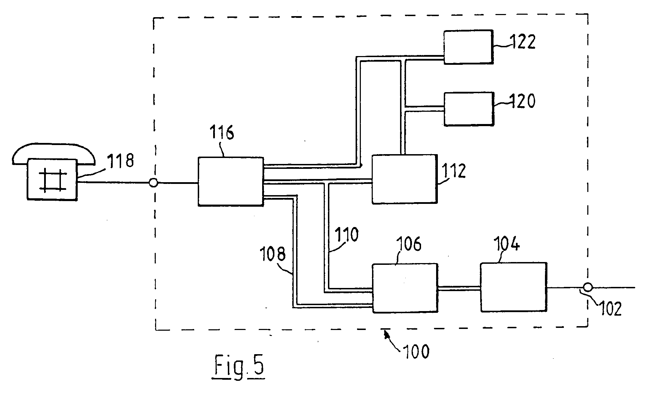

Fig. 5 zeigt ein nicht ladbares Kommunikationsendgerät 100, das über eine Teilnehmeranschußleitung 102 an ein z.B. in den Fig. 1 bis 3 dargestelltes Kommunikationsnetz angeschlossen sein kann. Das Kommunikationsendgerät 100 verfügt wie das Kommunikationsendgerät 51 aus Fig. 4 über eine Leitungsschnittstelle 104 und einen Multiplexer-Demultiplexer 106, der die Daten auf einen Informationskanal 108 und einen Signalisierungskanal 110 aufteilt. An den Signalisierungskanal 110 ist ein Rechner 112 angeschlossen, dessen Adress- und Datenkanal 114 zusammen mit den beiden anderen Kanälen 108, 110 auf einen Umsetzer 114 für einen Fernsprechapparat 118 führt. An dem Adress- und Datenkanal 114 des Rechners 112 sind ein Programmspeicher 120 und ein Datenspeicher 122 angeschlossen. Dieses Kommunikationsendgerät 100 ist nur für den Basisdienst "Sprachverbindung" ausgerüstet. Es verfügt über keinen Anschluß an einen Datenträger. Wird dieses Kommunikationsendgerät für einen höheren bzw. anderen Dienst angewählt, so wird im Rechner 112 ein Signal generiert, welches z. B. über den Signalisierungskanal 110, den Multiplexer-Demultiplexer 106 und die Leitungsschnittstelle 104 auf die Teilnehmeranschlußleitung 102 abgegeben wird. Dieses Signal signalisiert einem anwählenden Teilnehmer, daß das Einstellen eines gewünschten höheren Kommunikationsdienstes nicht möglich ist.

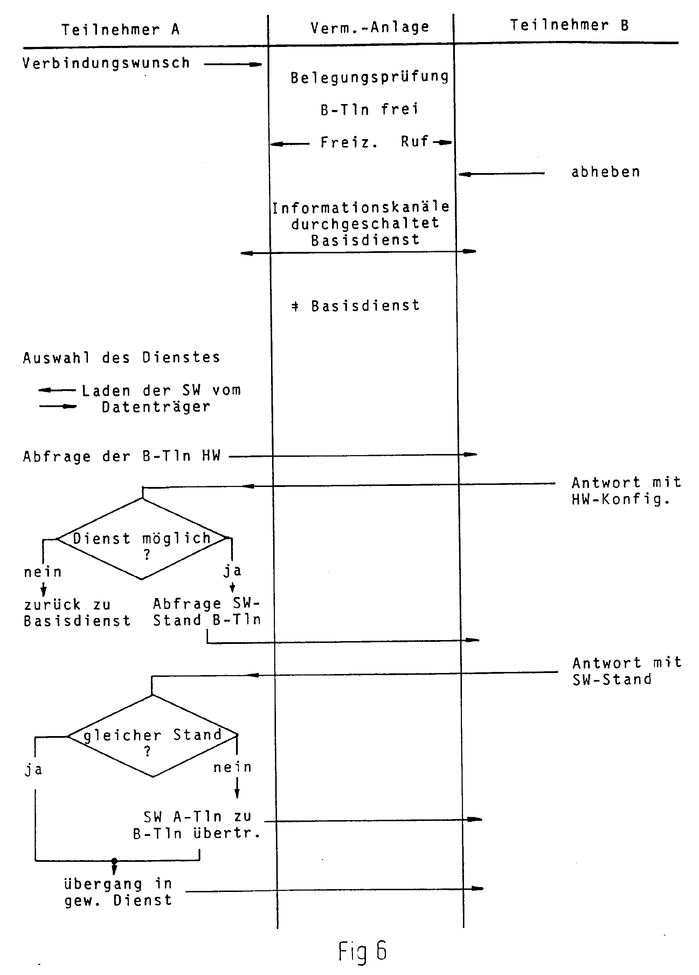

In Fig. 6 ist der Ablaufplan des Aufbaus eines Kommunikationsdienstes zwischen zwei Teilnehmern in einem Fernmeldenetz entsprechend Fig. 1 dargestellt. Der Verbindungsaufbau wird über eine Vermittlungsanlage gesteuert. Ausgelöst durch einen Verbindungswunsch des Teilnehmers A wird von der Vermittlungsstelle geprüft, ob der angewählte Anschluß des Teilnehmers B frei ist. In diesem Falle sendet die Vermittlungsstelle an den Teilnehmer A ein Freizeichen und an den Teilnehmer B ein Rufsignal, z. B. als akustisches Signal. Hebt der Teilnehmer B daraufhin den Hörer seines Fernsprechapparates ab, so schaltet die Vermittlungsstelle den oder die Informationskanäle durch und die beiden Teilnehmer können im Rahmen des Basisdienstes, in diesem Fall einer Sprechverbindung, miteinander kommunizieren.

Soll eine Kommunikationsverbindung aufgebaut werden, die über diesen Basisdienst hinausgeht, so wählt z. B. der Teilnehmer A von seinem Fernsprechapparat oder Bildschirmarbeitsplatz den gewünschten Kommunikationsdienst aus. Die für diesen Kommunikationsdienst notwendigen Konfigurations- und Programmdaten werden nun von einem Datenträger, z. B. einer Magnetplatte, in den Datenspeicher des Kommunikationsendgerätes des Teilnehmers A geladen. Nachdem dieses Programm geladen ist, fragt der Teilnehmer A beim Teilnehmer B nach, ob die für den gewünschten Dienst notwendige Geräteausstattung bei diesem vorhanden ist. Kann der Kommunikationsdienst mit der Konfiguration des Endgerätes des Teilnehmers B nicht realisiert werden, so schaltet das Endgerät des Teilnehmers A wieder in den Basisdienst zurück. Ist die für den Kommunikationsdienst notwendige Geräteausstattung jedoch vorhanden, so findet ein Vergleich des Softwarestandes statt, um unnötige Datenübertragungen über das Kommunikationsnetz zu vermeiden. Bei einer Anordnung nach Fig. 1 wird dadurch festgestellt, ob die Datenträger 16, 18 der beteiligten Kommunikationsendgeräte 12, 14 mit der gleichen Software arbeiten. Stimmt die Software derEndgeräte der Teilnehmer A und B überein, so lädt der Teilnehmer B das erforderliche Programm von dem seinem Endgerät zugeordneten Datenträger in sein Endgerät, wonach der gewünschte Kommunikationsdienst durchgeführt werden kann. Stimmt die Software der beiden Endgeräte nicht überein, so wird die Software von dem Endgerät des Teilnehmers A zum Endgerät des Teilnehmers B übertragen, und der Obergang in den gewünschten Kommunikationsdienst kann stattfinden.

## Patentansprüche

1. Verfahren zum Einstellen von Kommunikationsdiensten in Kommunikationsendgeräten (12, 14) eines Kommunikationsnetzes (10) mit einer Mehrzahl von Kommunikationsendgeräten (12, 14) und mindestens einer Steuereinheit und mindestens einem Datenträger (16, 18),
**dadurch gekennzeichnet**,
daß mit Hilfe der Steuereinheit die jeweils für einen weiteren Kommunikationsdienst erforderlichen Konfigurations- und/oder Programmdaten von dem Datenträger (16,18) auf eine gewünschte Anzahl von an der Kommunikation beteiligten Kommunikationsendgetäten (12, 14) übertragen werden, wobei das Einstellen des weiteren Kommunikationsdienstes und die Übertragung von einem der beteiligten Kommunikationsendgeräte (12, 14) aus in einem konfigurierten Basisdienst veranlaßt wird.

2. Verfahren nach Anspruch 1,
**dadurch gekennzeichnet**,
daß bei nicht konfigurierbaren Kommunikationsendgeräten (12, 14) der Basisdienst eingestellt wird.

3. Verfahren nach Anspruch 1 oder 2,
**dadurch gekennzeichnet**,
daß das Kommunikationsendgerät (12, 14), von dem aus das Einstellen eines Kommunikationsdienstes veranlaßt wird, vor der gewünschten Anzahl von Kommunikationsendgeräten (12, 14) mit für den Aufbau eines weiteren Kommunikationsdienstes erforderlichen Konfigurationsdaten geladen wird.

4. Verfahren nach Anspruch 1 oder 2,
**dadurch gekennzeichnet,**
daß bei bereits in den Kommunikationsendgeräten (12, 14) vorhandenen Konfigurations- und/oder Programmdaten die für den weiteren Kommunikationsdienst übertragenen mit den vorhandenen Konfigurations- und/oder Programmdaten verglichen werden, und daß die Übertragung der Daten abhängig vom Vergleich veranlaßt wird.

5. Verfahren nach Anspruch 4,
**dadurch gekennzeichnet**,
daß bei Übereinstimmung der Konfigurations- und/oder Programmdaten der weitere Kommunikationsdienst eingestellt wird.

6. Anordnung zum Einstellen von Kommunikationsdiensten in Kommunikationsendgeräten (12, 14) eines mehrere Vermittlungsstellen (32,34) aufweisenden Kommunikationsnetzes (10) mit einer Mehrzahl von Kommunikationsendgeräten (12, 14) und mindestens einer Steuereinheit und mindestens einem Datenträger (16, 18) und bei der mit Hilfe der Steuereinheit die jeweils für einen weiteren eingestellten Kommunikationsdienst erforderlichen Konfigurations- und/oder Programmdaten von dem Datenträger (16, 18) auf eine gewünschte Anzahl von an der Kommunikation beteiligten Kommunikationsendgeräten (12, 14) übertragen werden, wobei das Einstellen eines weiteren Kommunikationsdienstes und die Übertragung von einem der beteiligten Kommunikationsendgeräte (12, 14) aus in einem konfigurierten Basisdienst veranlaßt wird,
**dadurch gekennzeichnet,**
- daß jeweils einem Kommunikationsendgerät (12, 14) ein Datenträger (16, 18) zugeordnet ist, oder
- daß jeweils einer Vermittlungsstelle (32, 34) ein Datenträger (36, 38) zugeordnet ist, oder
- daß der Datenträger (26) einer zentralen Stelle im Kommunikationsnetz (20) zugeordnet ist.

7. Anordnung zum Einstellen von Kommunikationsdiensten in Kommunikationsendgeräten (12, 14) eines Kommunikationsnetzes (10) mit einer Mehrzahl von Kommunikationsendgeräten (12, 14), die jeweils über einen Umsetzer (62 bis 70) mit einem Informationskanal (58), einem Signalisierungskanal (60) und einem Rechner (82) mit einem Arbeitsspeicher (88) verbunden sind, und mindestens einer Steuereinheit und mindestens einem Datenträger (16, 18),und bei der mit Hilfe der Steuereinheit die jeweils für einen weiteren Kommunikationsdienst erforderlichen Konfigurations- und/oder Programmdaten von dem Datenträger (16,18) auf eine gewünschte Anzahl von an der Kommunikation beteiligten Kommunikationsendgeräten (12, 14) übertragen werden, wobei das Einstellen eines weiteren Kommunikationsdienstes und die Übertragung von einem der beteiligten Kommunikationsendgeräte (12, 14) aus in einem konfigurierten Basisdienst veranlaßt wird,
**dadurch gekennzeichnet,**
daß der Arbeitsspeicher (88) mit dem Informationskanal (58) verbunden ist.

8. Verfahren nach Anspruch 1, 2 oder 4, bei dem in den Kommunikationsendgeräten bereits Konfigurations- und/oder Programmdaten vorhanden sind,
**dadurch gekennzeichnet,**
daß die für den Kommunikationsdienst vorgesehenen Konfigurations- und/oder Programmdaten mit den vorhandenen Daten verglichen werden, und daß die Übertragung der Daten abhängig vom Vergleich veranlaßt wird.

9. Verfahren nach Anspruch 8,
**dadurch gekennzeichnet,**
daß bei Übereinstimmung der Daten der Kommunikationsdienst eingestellt wird.

## Claims

1. Method for setting up communication services in communication terminals (12, 14) of a communications network (10) having a plurality of communication terminals (12, 14) and at least one control unit and at least one data carrier (16, 18), characterized in that, with the aid of the control unit, the configuration and/or program data required in each case for a further communication service are transmitted from the data carrier (16, 18) to a desired number of communication terminals (12, 14) participating in the communications, the setting-up of the further communication service and the transmission from one of the participating communication terminals (12, 14) being initiated in a configured basic service.

2. Method according to Claim 1, characterized in that the basic service is set up in the non-configurable communication terminals (12, 14).

3. Method according to Claim 1 or 2, characterized in that the communication terminal (12, 14) from which the setting-up of a communication service is initiated is loaded with the configuration data required for establishing a further communication service before the desired number of communication terminals (12, 14).

4. Method according to Claim 1 or 2, characterized in that in the case where configuration and/or program data are already present in the communication terminals (12, 14), the data transmitted for the further communication service are compared with the existing configuration and/or program data, and the transmission of the data is initiated depending on the comparison.

5. Method according to Claim 4, characterized in that the further communication service is set up if the configuration and/or program data match.

6. Arrangement for setting up communication services in communication terminals (12, 14) of a communications network (10) having a plurality of exchanges (32, 34) and having a plurality of communication terminals (12, 14) and at least one control unit and at least one data carrier (16, 18), and in which, with the aid of the control unit, the configuration and/or program data required in each case for a further communication service set up are transmitted from the data carrier (16, 18) to a desired number of communication terminals (12, 14) participating in the communications, the setting-up of a further communication service and the transmission from one of the participating communication terminals (12, 14) being initiated in a configured basic service, characterized
- in that a data carrier (16, 18) is assigned to one communication terminal (12, 14) in each case, or
- in that a data carrier (36, 38) is assigned to one exchange (32, 34) in each case, or
- in that the data carrier (26) is assigned to a central station in the communications network (20).

7. Arrangement for setting up communication services in communication terminals (12, 14) of a communications network (10) having a plurality of communication terminals (12, 14), which are each connected via a converter (62 to 70) to an information channel (58), a signalling channel (60) and a computer (82) with a main memory (88), and at least one control unit and at least one data carrier (16, 18), and in which, with the aid of the control unit, the configuration and/or program data required in each case for a further communication service are transmitted from the data carrier (16, 18) to a desired number of communication terminals (12, 14) participating in the communications, the setting-up of a further communication service and the transmission from one of the participating communication terminals (12, 14) being initiated in a configured basic service, characterized in that the main memory (88) is connected to the information channel (58).

8. Method according to Claim 1, 2 or 4, in which configuration and/or program data are already present in the communication terminals, characterized in that the configuration and/or program data provided for the communication service are compared with the existing data, and in that the transmission of the data is initiated depending on the comparison.

9. Method according to Claim 8, characterized in that the communication service is set up if the data match.

## Revendications

1. Procédé pour insérer des services de communication, dans des terminaux (12, 14) de communication d'un réseau (10) de communication ayant une pluralité de terminaux (12, 14) de communication et au moins une unité de commande et au moins un support (16, 18) de données,
caractérisé en ce que,
à l'aide de l'unité de commande, les données de configuration et/ou de programme chaque fois nécessaires à un autre service de communication sont transmises par le support (16, 18) de données à un nombre souhaité de terminaux (12, 14) de communication prenant part à la communication, l'insertion de l'autre service de communication et la transmission à partir de l'un des terminaux (12, 14) de communication participants étant effectués dans un service de base configuré.

2. Procédé selon la revendication 1,
caractérisé en ce que,
dans le cas de terminaux (12, 14) de communication non configurables, on insère le service de base.

3. Procédé selon la revendication 1 ou 2,
caractérisé en ce que,
on charge le terminal (12, 14) de communication, à partir duquel on effectue l'insertion d'un service de communication, avant le nombre souhaité de terminaux (12, 14) de communication ayant des données de configuration nécessaires à la constitution d'un autre service de communication.

4. Procédé selon la revendication 1 ou 2,
caractérisé en ce que,
dans le cas de données de configuration et/ou de programme déjà présentes dans les terminaux (12,14) de communication, on compare les données de configuration et/ou de programme transmises pour l'autre service de communication aux données présentes de configuation et/ou de programme et on effectue la transmission des données en fonction de la comparaison.

5. Procédé selon la revendication 4,
caractérisé en ce que,
en cas de concordance des données de configuration et/ou de programme, l'autre service de communication est inséré.

6. Dispositif pour insérer des services de communication dans des terminaux (12, 14) de communication d'un réseau (10) de communication comportant plusieurs centraux téléphoniques (32, 34), et une pluralité de terminaux (12, 14) de communication et au moins une unité de commande et au moins un support (16, 18) de données, et dans lequel les données de configuration et/ou de programme, chaque fois nécessaires pour un autre service de communication inséré, sont transmises, à l'aide de l'unité de commande, par le support (16, 18) de données à un nombre souhaité de terminaux (12, 14) de communication prenant part à la communication, l'insertion d'un autre service de communication et la transmission à partir d'un des terminaux (12, 14) de communication participants étant effectués dans un service de base configuré,
caractérisé en ce que
- un support (16, 18) de données est chaque fois associé à un terminal (12, 14) de communication, ou
- en ce qu'un support (36, 38) de données est chaque fois associé à un central téléphonique (32, 34), ou
- en ce que le support (26) de données est associé à un poste central dans le réseau (20) de communication.

7. Dispositif pour insérer des services de communication dans des terminaux (12, 14) de communication d'un réseau (10) de communication comportant une pluralité de terminaux (12, 14), de communication qui sont chacun reliés, par l'intermédiaire d'un convertisseur (62 à 70) à un canal (58) d'informations, à un canal (60) de signalisation et à un ordinateur (82) ayant une mémoire (88) de travail, ainsi qu'au moins une unité de commande et au moins un support (16, 18) de données et dans lequel les données de configuration et/ou de programme chaque fois nécessaires à un autre service de communication sont transmises, à l'aide de l'unité de commande, par le support (16, 18) de données à un nombre souhaité de terminaux (12, 14) de communication prenant part à la communication, l'insertion d'un autre service de communication et la transmission à partir d'un des terminaux (12, 14) de communication participants étant effectués dans un service de base configuré,
caractérisé en ce que,
la mémoire (88) de travail est reliée au canal (58) d'informations.

8. Procédé selon la revendication 1, 2 ou 4, dans lequel des données de configuration et/ou de programme sont déjà présentes dans les terminaux de communication,
caractérisé en ce que,
on compare les données de configuration et/ou de programme prévues pour le service de communication aux données présentes, et on effectue la transmission des données en fonction de la comparaison.

9. Procédé selon la revendication 8,
caractérisé en ce que,
en cas de concordance des données, le service de communication est inséré.
